# EUROPÄISCHE PATENTSCHRIFT

(11) **EP 3 786 424 B1**
(45) Veröffentlichungstag und Bekanntmachung des Hinweises auf die Patenterteilung: **19.02.2025**
(21) Anmeldenummer: 20192339.8
(22) Anmeldetag: 24.08.2020
(51) Int. Cl.: F02B 1/08, F02B 23/08, F02B 23/10, F02M 21/02, F02F 1/24

(54) **FREMDGEZÜNDETE BRENNKRAFTMASCHINE MIT INNERER GEMISCHBILDUNG ZUR VERBRENNUNG EINES GEMISCHS AUS EINEM GASFÖRMIGEN KRAFTSTOFF UND LUFT**
SPARK IGNITION COMBUSTION ENGINE WITH INTERNAL MIXTURE FORMATION FOR COMBUSTION OF A MIXTURE OF A GASEOUS FUEL AND AIR
MOTEUR À COMBUSTION INTERNE À ALLUMAGE EXTERNE À FORMATION INTÉRIEURE DE MÉLANGE DESTINÉ À LA COMBUSTION D'UN MÉLANGE DE CARBURANT GAZEUX ET D'AIR

(30) Priorität: 26.08.2019 DE 102019006019
(43) Veröffentlichungstag der Anmeldung: 03.03.2021
(73) Patentinhaber: MAN Truck & Bus SE, 80995 München (DE)
(72) Erfinder: Kübler, Werner, 80995 München (DE)
(74) Vertreter: v. Bezold & Partner Patentanwälte - PartG mbB

(56) Entgegenhaltungen:
- WO-A1-2015/138987
- DE-A1- 102009 037 160
- FR-A1- 3 061 743
- US-A- 3 572 297

## Beschreibung

Die Erfindung betrifft eine fremdgezündete Brennkraftmaschine mit innerer Gemischbildung zur Verbrennung eines Gemischs aus einem gasförmigen Kraftstoff und Luft unter Arbeitsleistung. Der gasförmige Kraftstoff kann vorzugsweise Wasserstoff sein. Die Erfindung betrifft ferner ein Kraftfahrzeug, vorzugsweise ein Nutzfahrzeug, mit einer solchen Brennkraftmaschine sowie die Verwendung einer solchen fremdgezündeten Brennkraftmaschine als Generatorantriebsmotor zur Stromerzeugung oder für maritime Anwendungen.

Wasserstoff kann als Kraftstoff wegen seiner chemischen Eigenschaften große Bedeutung gewinnen und in Verbrennungsmotoren besonders vorteilhaft zur Drehmomenterzeugung genutzt werden. Entsprechend sind aus dem Stand der Technik bereits Wasserstoffverbrennungsmotoren bekannt. Dies sind Verbrennungsmotoren, die mit Wasserstoff als Kraftstoff betrieben werden. Grundlage ist die Knallgasreaktion (zwei Teile Wasserstoff mit einem Teil Sauerstoff) in einem Kolbenrotationszylinder. Das Grundkonzept derartiger Verbrennungsmotoren entspricht somit dem herkömmlicher Hubkolbenmotoren mit einem oder mehreren Zylindern. Lediglich beispielhaft wird auf die Dokumente EP 1 647 684 A2 und DE 103 59 445 A1 verwiesen.

Ein anderes Beispiel ist aus dem DE 10 2009 037160 A1 bekannt.

Für die Verwendung von Wasserstoff als Brennstoff werden üblicherweise modifizierte OttoMotoren als fremdgezündete Brennkraftmaschinen verwendet, wobei auch Wasserstoffverbrennungsmotoren bekannt sind, die nach dem Dieselprozess arbeiten. Bei den als fremdgezündete Brennkraftmaschinen arbeitenden Wasserstoffverbrennungsmotoren wird der Wasserstoff mittels einer Düse in den Brennraum eingebracht und mit einer Zündkerze gezündet. Dabei bildet sich eine Flammenfront aus, die sich von der Zündkerze in Richtung auf die Zylinderwand ausbreitet.

Betreffend die Gemischbildung sind einerseits Wasserstoffverbrennungsmotoren bekannt, die mit äußerer Gemischbildung (Saugrohreinspritzung) arbeiten, als auch Wasserstoffverbrennungsmotoren, die mit innerer Gemischbildung (Direkteinblasung) arbeiten.

Bei der äußeren Gemischbildung wird der unter Druck gespeicherte Wasserstoff mit geringem Überdruck gasförmig in das Ansaugrohr vor die Einlassventile eingeblasen. Bei der inneren Gemischbildung wird gasförmiger Wasserstoff unter Druck direkt in den Verbrennungsraum eingeblasen. Das Ladungsgemisch wird während der Kompressionsphase deutlich erwärmt und dann mit einer Zündkerze gezündet. Neben Wasserstoffmotoren sind weiterhin Erdgas- und Biogasmotoren sowie die Verwendung anderer Brenngase bekannt.

Die Verbrennungsgeschwindigkeit von Wasserstoff liegt im Bereich von 200 m/s und ist bei gleichen Umgebungsbedingungen wesentlich höher als die Verbrennungsgeschwindigkeit der Brennstoffe Diesel und Benzin (ca. 20 m/s). Ähnlich wie bei herkömmlichen Verbrennungsmotoren können auch bei Wasserstoffmotoren Verbrennungsanomalien wie Klopfen, Glüh- bzw. Frühzündung oder Rückzündung auftreten. Verbrennungsanomalien entstehen bevorzugt an "Hot-Spots", d. h. an besonders heißen Stellen des Brennraums. Kritische Brennraumbereiche sind insbesondere die Zündkerze bzw. der Bereich um die Zündkerze, der Auslassventilteller, Ventilstege sowie das Brennraumdach.

Entsprechend ist bei den aus dem Stand der Technik bekannten Wasserstoffverbrennungsmotoren oftmals ein Nachteil, dass die Komponenten im Brennraum, insbesondere die Zündkerze und das Einblasventil, einer hohen thermischen Belastung ausgesetzt sind, was sich nachteilig auf deren Funktion und Lebensdauer auswirkt.

Zur Lösung dieses Problems schlägt die WO 2015/138987 A1 einen Einspritz-Zündapparat mit einer Vorkammer vor, wobei die Vorkammer in Fluidverbindung mit einem Brennraum eines Verbrennungsmotors steht. Diese kann dabei als integrierte, verschraubte, einzelne Einheit ausgeführt werden, die für den Betrieb von Hochleistungs-Direkteinspritzmotoren mit Fremdzündung mit gasförmigen Kraftstoffen in verdünnten oder mageren Verhältnissen geeignet ist. Ferner offenbart die WO 2015/138987 A1 auch Verfahren für Verbrennungsprozesse zum Betrieb eines fremdgezündeten Motors mit Direkteinspritzung und magerer Verbrennung, wobei Einspritzereignisse während des Ansaug- und Verdichtungstakts in einem Motor erfolgen sollen.

Weiterhin offenbart die US 3 572 297 A einen Verbrennungsmotor, der durch direkte Einspritzung von Wasserstoff in seine Zylinder betrieben wird. Hierbei wird Wasserstoff mit einem Teil der Luft in den Zylindern gemischt, um ein brennbares Gemisch zu bilden, das gleichzeitig mit der Einspritzung über einen Teil des Expansionstakts und in einigen Fällen über einen Teil des Verdichtungstakts gezündet und verbrannt wird. Für die Einspritzung des Wasserstoffs werden Doppeltellerventile verwendet, die sich in Abhängigkeit von den erfassten Motorbetriebsparametern öffnen und schließen.

Aus der FR 3 061 743 A1 ist ferner eine Ventilzündungsvorkammer für eine Brennkraftmaschine bekannt, die einen Brennraum aufweist, in dem eine mit einem neutralen Gas mehr oder weniger verdünnte Hauptladung gezündet wird. Die Vorkammer weist dabei einen Schichtungshohlraum auf, in den Zündmittel münden und in den ein Schichtungsinjektor eine leicht zündbare Pilotladung unter Druck einspritzen kann. Weiterhin kann ein Schichtungsventil den Schichtungskanal ganz oder teilweise verschließen, insbesondere unter der Wirkung des in der Brennkammer herrschenden Gasdrucks.

Es ist eine Aufgabe der Erfindung, eine verbesserte Brennkraftmaschine zur Verbrennung eines Gemischs aus einem gasförmigen Kraftstoff, vorzugsweise Wasserstoff, und Luft bereitzustellen, mit der Nachteile herkömmlicher mit gasförmigem Kraftstoff betriebener Brennkraftmaschinen vermieden werden können. Die Aufgabe der Erfindung ist es insbesondere, eine solche Brennkraftmaschine bereitzustellen, die die thermische Belastung von Komponenten im Brennraum verringert.

Diese Aufgaben werden durch eine fremdgezündete Brennkraftmaschine mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem allgemeinen Gesichtspunkt der Erfindung wird eine fremdgezündete Brennkraftmaschine mit innerer Gemischbildung zur Verbrennung eines Gemischs aus einem gasförmigen Kraftstoff und Luft unter Arbeitsleistung bereitgestellt. Die fremdgezündete Brennkraftmaschine (nachfolgend auch kurz als Brennkraftmaschine oder Verbrennungsmotor bezeichnet) umfasst mindestens einen Zylinder, in dem ein Brennraum zwischen einem längsbeweglich angeordneten Kolben und einem Zylinderkopf begrenzt ist. Die Brennkraftmaschine umfasst ferner in an sich bekannter Weise Ladungswechselventile zum Zuführen von Luft (Lufteinlassventile) in den Brennraum und Ladungswechselventile zum Abführen von Abgas (Auslassventile) aus dem Brennraum.

Jeder der mindestens einen Zylinder umfasst ein im Zylinderkopf angeordnetes Einblasventil und eine im Zylinderkopf angeordnete Zündkerze.

Das Einblasventil bzw. Einblaseventil dient zum Zuleiten des gasförmigen Brennstoffes in den Brennraum, wo sich der gasförmige Brennstoff mit Luft vermischt.

Erfindungsgemäß ist das Einblasventil beabstandet zum Brennraum in einem in den Brennraum unmittelbar mündenden Zuführkanal angeordnet. Dieser Zuführkanal wird nachfolgend auch als erster Zuführkanal bezeichnet zur besseren Unterscheidung von einem nachfolgend beschriebenen weiteren Zuführkanal, der als zweiter Zuführkanal bezeichnet wird. Mit anderen Worten ragt das Einblasventil nicht in den Brennraum hinein oder grenzt direkt an diesen an, sondern ist im Zylinderkopf zurückgesetzt hierzu angeordnet. Ein durch das Einblasventil in Richtung Brennraum austretender gasförmiger Kraftstoff tritt somit nicht direkt in den Brennraum ein, sondern muss zumindest noch eine Wegstrecke im Zuführkanal zurücklegen, bevor der gasförmige Kraftstoff in den Brennraum eintreten kann. Entsprechend des Prinzips der inneren Gemischbildung wird das Einblasventil (oder Einblaseventil) auch als Direkteinblasventil bezeichnet, weil der gasförmige Kraftstoff unter Druck direkt über den Zuführkanal oder die Zuführkanäle in dem Brennraum eingeblasen wird (innere Gemischbildung) und nicht, wie bei der äußeren Gemischbildung, mit geringem Überdruck gasförmig in das Ansaugrohr vor die Einlassventile eingeblasen wird.

Die Brennkraftmaschine umfasst ferner eine im Zylinderkopf angeordnete, eine Zündspitze aufweisende Zündkerze, die in einem in den Brennraum mündenden weiteren Zuführkanal, nachfolgend als zweiter Zuführkanal bezeichnet, angeordnet ist, wobei die Zündspitze beabstandet zur Mündung des zweiten Zuführkanals in den Brennraum angeordnet ist. Mit anderen Worten ragen die Zündkerze und deren Zündspitze nicht in den Brennraum hinein, sondern sind im Zylinderkopf zurückgesetzt hierzu angeordnet.

Zusammenfassend ragen sowohl die Zündkerze als auch das Einblasventil nicht unmittelbar in den eigentlichen Brennraum des Kolbens, sondern sind im Zylinderkopf zurückgesetzt. Die erfindungsgemäße Anordnung von Zündkerze und Direkteinblasventil bietet den besonderen Vorzug, dass diese Bauteile durch die Zurücksetzung thermisch weniger belastet werden. Entsprechend erreicht die Zündkerze höhere Standzeiten und das Direkteinblasventil kann kostengünstiger konstruiert werden.

Da erfindungsgemäß somit das Direkteinblasventil nicht bis in den Brennraum hineinragt, ergeben sich ferner konstruktiv mehr Freiheitsgrade für das Direkteinblasventil, um die Performance zu optimieren, und es besteht auch nicht die Notwendigkeit, den Zylinderkopf bei Einsatz von Wasserstoff ausgehend von einem flüssigen Kraftstoff aufwändig umzukonstruieren. Ein weiterer besonderer Vorteil ist, dass die zurückgesetzte Anordnung von Gaseinblasventil und Zündkerzenspitze es ermöglicht - wie nachfolgend noch detaillierter beschrieben wird - magere Gemische sauber zu verbrennen. Der Grund ist, dass beim Ansaugvorgang im Bereich des zweiten Zuführkanals ein fetteres Gemisch (niedrigeres Lambda) als im Brennraum erzeugbar ist, was von der Zündkerze gezündet werden kann. Diese erzeugt einen Zündstrahl durch den zweiten Zuführkanal hin zum Brennraum, wodurch auch magere Gemische mit großem Lambda möglichst vollständig und sauber verbrannt werden können. Dies ermöglicht wiederum geringe Stickoxidemissionen.

Gemäß einer besonders bevorzugten Ausführungsform ist der gasförmige Kraftstoff Wasserstoff. Ferner kann das Einblasventil mit einer Wasserstoff-Speichereinrichtung in Fluidverbindung stehen. Neben dieser beispielhaft hervorgehobenen Anwendung kann der gasförmige Kraftstoff jedoch auch ein anderer gasförmiger Kraftstoff sein.

Der erste Zuführkanal mündet direkt in den Brennraum, somit nicht mittelbar über den zweiten Zuführkanal in den Brennraum mündet. Gemäß diesem Aspekt münden die beiden Zuführkanäle an unterschiedlichen Stellen in den Brennraum. Hierbei dient der zweite Zuführkanal somit zur Zufuhr von gasförmigem Kraftstoff und Luft zur zum Brennraum zurückgesetzten Zündspitze.

Ferner kann der zweite Zuführkanal in einem mittleren Bereich eines Brennraumdachs in den Brennraum münden. Besonders vorteilhaft ist, wenn der zweite Zuführkanal mittig am Brennraumdach in den Brennraum mündet. Vorliegend bildet der Zylinderkopf das Brennraumdach aus, insbesondere der dem Kolben zugewandte Bereich des Zylinderkopfs.

Vorstehend wurde bereits ausgeführt, dass der Bereich, der zwischen dem längsbeweglich angeordneten Kolben und dem Zylinderkopf begrenzt ist, vorliegend als Brennraum bezeichnet wird. Der zweite Zuführkanal und der erste Zuführkanal werden nicht als Teil des Brennraums angesehen, auch wenn im zweiten Zuführkanal die Verbrennung gezündet bzw. initiiert wird, ähnlich einer Zündkerze mit Vorkammer.

Unter dem Brennraumdach wird die den Zylinder begrenzende Zylinderkopfwandung verstanden, durch welche hindurch der Ladungswechsel (Zuführen von Luft und Brennstoff, Ausstoß des Abgases) stattfindet.

Die fremdgezündete Brennkraftmaschine umfasst eine Motorsteuerungseinrichtung, die ausgebildet ist, eine Gaseinblasung des gasförmigen Kraftstoffes mittels des Einblasventils während eines Ansaugvorgangs durchzuführen und vor Beginn der Kompressionsphase zu beenden.

Gemäß diesem Aspekt kann beispielsweise die Gaseinblasung des gasförmigen Kraftstoffes während des Ansaugvorgangs der Brennkraftmaschine erfolgen, wobei die Einlassventile offen sind und der Kolben sich nach unten bewegt, d. h. vom Zylinderkopf weg. Die Motorsteuereinrichtung kann das Gaseinblaseventil so ansteuern, dass es schließt, bevor die Kompressionsphase im Zylinder beginnt.

Dies bietet den Vorzug, dass sich im Bereich der Zündkerzenspitze ein großer Anteil, vorzugsweise nahezu 100 % gasförmiger Kraftstoff, befindet. Mit dem Kompressionstakt wird das Wasserstoff-Luft-Gemisch aus dem Brennraum auch in die Zuführkanäle gedrückt, der dort vorhandene gasförmige Kraftstoff komprimiert und auch mit der im Zylinder bzw. Brennraum bestehenden Ladung vermischt. In jedem Fall wird aber erreicht, dass das Gemisch an der Zündkerzenspitze "fetter" ist, wodurch die Zündwilligkeit erhöht wird. Die Verbrennung unmittelbar an der Zündkerze initiiert, ähnlich einer Zündkerze mit Vorkammer, über den zweiten Zuführkanal eine Fortpflanzung der Verbrennung mit hoher Energie im (Haupt-)Brennraum und stellt sicher, dass auch magere Gemische mit großem Lambda vollständig durchbrennen.

Weil auch magere Gemische sauber verbrannt werden können, wurde im Rahmen der Erfindung überraschend festgestellt, dass eine im Ansaugtrakt angeordnete Drosselklappe nicht unbedingt notwendig ist, wie es sonst für fremdgezündete Brennkraftmaschinen üblich ist. Entsprechend kann gemäß einem vorteilhaften Aspekt der Erfindung vorgesehen sein, dass die fremdgezündete Brennkraftmaschine keine Drosselklappe aufweist. Durch den Entfall der Drosselklappe lässt sich der Wirkungsgrad der Brennkraftmaschine verbessern. Im Falle einer Abgasrückführung und der Kenntnis der Abgasmasse kann auch diese als Regelgröße berücksichtigt werden.

Gemäß einer weiteren Ausführungsform kann die Brennkraftmaschine ferner eine Abgasrückführung nach dem Spenderzylinderprinzip umfassen, die ausgebildet ist, Abgas einer Teilmenge der Zylinder der Brennkraftmaschine auf eine Ansaugseite rückzuführen. Damit lassen sich, insbesondere bei Wasserstoffverbrennungsmotoren, die Stickoxidemissionen so weit reduzieren, dass zur Einhaltung der aktuellen Grenzwerte zum Teil keine Abgasnachbehandlungseinrichtungen notwendig werden. Aufgrund der Abgasrückführung ist auch eine Erhöhung des Verdichtungsverhältnisses möglich, wodurch der Wirkungsgrad des Motors weiter gesteigert werden kann. Ferner kann vorgesehen sein, das rückgeführte Abgas zu kühlen, beispielsweise mittels einer Kühleinrichtung und/oder eines mit der Abgasrückführung thermisch gekoppelten Kühlkreislaufs.

Zur Realisierung einer Abgasrückführung nach dem Spenderzylinderprinzip kann die Brennkraftmaschine beispielsweise mindestens einen Abgasturbolader aufweisen, welcher einen Verdichter sowie eine Turbine umfasst sowie eine Ladeluftleitung zur Zuführung von verdichteter Luft zur Brennkraftmaschine. Hierbei umfasst der mindestens eine Zylinder der Brennkraftmaschine eine erste Zylindergruppe und eine zweite Zylindergruppe, wobei die zweite Zylindergruppe nach dem Spenderzylinderprinzip arbeitet. Hierbei ist eine Abgassammelleitung vorgesehen, welche einen ersten Abschnitt zum Abgassammeln der ersten Zylindergruppe sowie einen zweiten Abschnitt zum Abgassammeln der zweiten Zylindergruppe aufweist. Ferner ist eine erste Abgasleitung vorgesehen, welche den ersten Abschnitt der Abgassammelleitung mit der Turbine verbindet, mit einer Rückführungsleitung zur Abgasrückführung aus dem zweiten Abschnitt der Abgassammelleitung in die Ladeluftleitung.

Ferner kann der Kolben der fremdgezündeten Brennkraftmaschine eine konkave Mulde aufweisen. Optional kann in der konkaven Mulde eine konvexe Erhebung vorgesehen sein. Diese Maßnahmen verbessern den Wirkungsgrad.

Gemäß einem weiteren Aspekt kann der erste Zuführkanal einen konstanten Querschnitt aufweisen, wobei vorzugsweise die Länge des ersten Zuführkanals größer als dessen Querschnittsbreite ist. Ferner kann der zweite Zuführkanal einen konstanten Querschnitt aufweisen, wobei vorzugsweise die Länge des zweiten Zuführkanals größer als dessen Querschnittsbreite ist. Ferner kann der erste Zuführkanal und/oder der zweite Zuführkanal durch eine Bohrung oder einen Kernguss hergestellt sein.

Die Erfindung betrifft ferner ein Kraftfahrzeug mit einer fremdgezündeten Brennkraftmaschine wie in diesem Dokument beschrieben. Das Kraftfahrzeug kann ein Nutzfahrzeug sein, wie beispielsweise ein Lastkraftwagen oder Omnibus.

Weitere bevorzugte Anwendungen der Erfindung umfassen die Verwendung einer fremdgezündeten Brennkraftmaschine, wie in diesem Dokument beschrieben, als Brennkraftmaschine, insbesondere Generatorantriebsmotor, zur Stromerzeugung oder für maritime Anwendungen. Die zuvor beschriebenen bevorzugten Ausführungsformen, Aspekte und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigt:

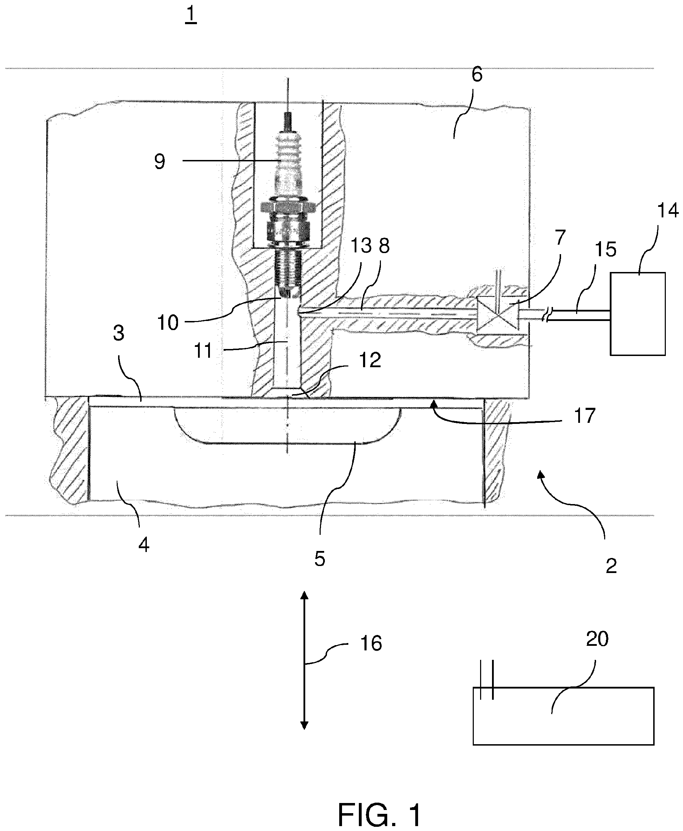

- Figur 1: eine schematische Detailansicht im Schnitt eines Zylinderkopfbereichs einer Brennkraftmaschine nicht gemäß einer Ausführungsform der Erfindung.

Die fremdgezündete Brennkraftmaschine 1 arbeitet nach dem Prinzip der inneren Gemischbildung zur Verbrennung eines Gemischs aus einem gasförmigen Kraftstoff, hier Wasserstoff, und Luft unter Arbeitsleistung. Die Brennkraftmaschine 1 stellt somit einen Wasserstoffmotor dar. Die Brennkraftmaschine 1 umfasst mindestens einen Zylinder 2, in dem ein Brennraum 3 zwischen einem längsbeweglich angeordneten Kolben 4 und einem Zylinderkopf 6 begrenzt ist. Die Bewegungsrichtung des Kolbens 4 ist durch den Pfeil 16 schematisch dargestellt. Der Kolben 6 weist eine konkave Mulde 5 auf.

Figur 1 zeigt eine schematische Detailansicht im Schnitt lediglich eines Zylinderkopfbereichs eines Zylinders 2 der Brennkraftmaschine 1. Jedoch umfasst jeder der Zylinder 2 eine im Zylinderkopf 6 angeordnete, eine Zündspitze 10 aufweisende Zündkerze 9, die in dem in den Brennraum mündenden zweiten Zuführkanal 11 angeordnet ist. Die Mündung des zweiten Zuführkanals 11 in den Brennraum 3 ist mit dem Bezugszeichen 12 gekennzeichnet. Hierbei ist die Zündspitze 10 beabstandet zur Mündung 12 des zweiten Zuführkanals 11 in den Brennraum 3 angeordnet.

Ferner umfasst jeder der Zylinder 2 ein im Zylinderkopf 6 angeordnetes Einblasventil 7, das als Regelventil ausgeführt sein kann. Das Einblasventil 7 ist beabstandet zum Brennraum 3 in einem ersten Zuführkanal 8 angeordnet. Der erste Zuführkanal 8 mündet mittelbar in den Brennraum 3 über den zweiten Zuführkanal 11. Das Einblasventil 7 steht mit einer Wasserstoff-Speichereinrichtung 14 über eine Leitung 15 in Fluidverbindung.

Der erste Zuführkanal 8 mündet zwischen der Zündspitze 10 und der Mündung 12 des zweiten Zuführkanals 11 in den Brennraum 3 in den zweiten Zuführkanal 11. Die Mündung des ersten Zuführkanals 8 in den zweiten Zuführkanal 11 ist mit dem Bezugszeichen 13 gekennzeichnet. Die Mündung 12 des zweiten Zuführkanals 11 in den Brennraum 3 befindet sich mittig am Brennraumdach 17.

Aufgrund seiner hohen Zündfähigkeit ist vorgesehen, den Wasserstoff direkt in den Verbrennungsraum 3 einzubringen, was über die Zuführkanäle 8, 11 erfolgt.

Zusammenfassend ragen sowohl die Zündkerze 9 als auch das Einblasventil 7 nicht unmittelbar in den eigentlichen Brennraum 3 des Kolbens, sondern sind im Zylinderkopf 6 zurückgesetzt und somit beabstandet zum eigentlichen (Haupt-)Brennraum 3 angeordnet. Die erfindungsgemäße Anordnung von Zündkerze 9 und Direkteinblasventil 7 bietet den besonderen Vorzug, dass diese Bauteile durch die Zurücksetzung thermisch weniger belastet werden. Entsprechend erreicht die Zündkerze 9 höhere Standzeiten, und das Direkteinblasventil 7 kann kostengünstiger konstruiert werden.

Die Brennkraftmaschine 3 umfasst ferner an jedem Zylinder 2 Ladungswechselventile zum Zuführen von Luft (Lufteinlassventile) in den Brennraum 3 und Ladungswechselventile zum Abführen von Abgas (Auslassventile) aus dem Brennraum 3, die jeweils nicht dargestellt sind und in an sich bekannter Weise ausgeführt sein können.

Das Gaseinblasventil 7 steht in Signalverbindung mit einer Motorsteuerungseinrichtung 20 und wird von dieser angesteuert. Die Motorsteuerungseinrichtung 20 kann das Motorsteuergerät sein. Die Motorsteuereinrichtung 20 ist ausgebildet, eine Gaseinblasung des gasförmigen Kraftstoffes mittels des Einblasventils während eines Ansaugvorgangs durchzuführen und vorzugsweise vor Beginn der Kompressionsphase zu beenden. Hierzu steuert die Motorsteuereinrichtung 20 das Gaseinblasventil 20 entsprechend an, um dieses zu öffnen bzw. zu schließen.

Nachfolgend wird ein Zündbetrieb der Brennkraftmaschine beschrieben.

Besonders vorteilhaft ist ein direktes Einbringen des Wasserstoffs in den Brennraum 3 während des Ansaugtaktes. Das Einbringen erfolgt in Strömungsrichtung nach dem Einlassventil (nicht dargestellt). Die Gaseinblasung erfolgt während des Ansaugvorgangs der Brennkraftmaschine 1, d. h. wenn das Einlassventil (nicht dargestellt) für Luft offen ist und der Kolben 4 sich nach unten bewegt. Hierzu wird das Einblasventil 7 in die Offenstellung gebracht. Das Einblasventil 7 wird wieder geschlossen, bevor die Kompressionsphase im Zylinder 2 beginnt. Damit sind im Bereich der Zündkerzenspitze 10 nahezu 100 % Wasserstoff, wenn die Kompressionsphase beginnt, da sich dort der Wasserstoff durch die Zuführkanäle 8, 11 bevorzugt ansammelt. Ein Teil des Wasserstoffs gelangt über die Zuführkanäle 8, 11 in den Brennraum und vermischt sich dort mit der durch die Einlassventile (nicht dargestellt) eingetretenen Luft (innere Gemischbildung). Mit dem Kompressionstakt wird das Wasserstoff-Luft-Gemisch auch in die Kanäle 8 und 11 gedrückt, der dort vorhandene Wasserstoff komprimiert und auch mit der im Zylinder bestehenden Ladung vermischt.

In jedem Fall wird aber erreicht, dass das Gemisch an der Zündkerzenspitze 10 "fetter" ist, wodurch die Zündwilligkeit erhöht wird. Die Verbrennung unmittelbar an der Zündkerze initiiert, ähnlich einer Zündkerze mit Vorkammer, über den Zuführkanal 11 eine Fortpflanzung der Verbrennung mit hoher Energie im Hauptbrennraum 3, sehr viel größer als die Zündenergie einer Zündkerze, und stellt sicher, dass auch magere Gemische im Brennraum 3 mit großem Lambda vollständig durchbrennen.

Die vom Brennraum 3 zurückgesetzte Anordnung der Zündkerze 9 und des Einblasventils 7 führt somit zu einer Wasserstoffanreicherung im zweiten Zuführkanal 11 und bei Zündung zu einer Art "Zündstrahl", der sich über den Zuführkanal 11 in den Brennraum 3 fortpflanzt. Dadurch, dass bei der gezeigten Konstruktion an der Zündkerze 9 immer ein verringertes Lambda vorherrscht, werden auch sehr magere Gemische im Brennraum 3 über den "Zündstrahl" noch zuverlässig und vollständig verbrannt. Dieses Prinzip ermöglicht auch den Wegfall der Drosselklappe, wie vorstehend bereits erwähnt wurde.

Das Motorsteuergerät regelt ferner in an sich bekannter Weise den "Fahrerwunsch", d. h. Drehmoment und/oder Drehzahl. Im Falle des Wasserstoffverbrennungsmotors ist die "einzublasende Kraftstoffmenge" abhängig von der "Gaspedalstellung", aber unter Berücksichtigung der Verbrennungsluftmenge (Lambda). Dazu wird die Luftmasse und im Falle der Abgasrückführung auch die Abgasmasse gemessen. Abhängig vom Luftverhältnis Lambda lassen sich auch die Stickoxidemissionen beeinflussen. Grundsätzlich gilt, je höher Lambda, umso geringer die Stickoxidemission.

Die Brennkraftmaschine 1 kann ferner eine Abgasrückführung nach dem Spenderzylinderprinzip aufweisen, die ausgebildet ist, Abgas einer Teilmenge der Zylinder 2 der Brennkraftmaschine 1 auf eine Ansaugseite rückzuführen. Dabei wird, z. B. im Falle eines 6-Zylindermotors, das gesamte Abgas eines Zylinders direkt zurück auf die Ansaugseite geführt. Damit wird eine stabile Abgasrückführquote (100/6) erreicht. Der Abgasturbolader bekommt dann nur noch die Abgasmasse von 5 Zylindern. In der Regel ist die Abgasrückführleitung mit einem Absperrventil auch abschaltbar. Das rückgeführte Abgas kann ferner noch gekühlt werden.

Durch die zurückgesetzte Anordnung von Zündkerze 9 und Einblasventil 7 lassen sich bestehende Motoren, insbesondere Common-Rail-Dieselmotoren mit Side-Feed-Injektoren, relativ einfach auf einen Betrieb mit Wasserstoff umrüsten. Aufgrund der konstruktiven Ähnlichkeit ist es möglich, gleiche Zylinderkopfgußteile für Diesel- und Wasserstoffmotoren einzusetzen. Beispielsweise kann aus einem Rohteil für den Zylinderkopf wahlweise sowohl ein Zylinderkopf für einen Dieselmotor mit Commonrail-Injektor und sog. Sidefeed-Anschluss gefertigt werden als auch der Zylinderkopf 6 für den Wasserstoffmotor bzw. die Brennkraftmaschine 1 gemäß Figur 1.

Eine derartige Brennkraftmaschine 1 bzw. ein derartiger Wasserstoffmotor eignet sich nicht nur für Kraftfahrzeuge (LKW und Busse), sondern ist auch geeignet als Generatorantriebsmotor zur Stromerzeugung oder für maritime Anwendungen. Wenn der Wasserstoff regenerativ erzeugt wurde, lässt sich die Brennkraftmaschine 1 als CO₂-neutrale Brennkraftmaschine bezeichnen und kann besonders in Dunkelflautezeiten wesentlich zur emissionsarmen Stromerzeugung beitragen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Brennkraftmaschine
- 2: Zylinder
- 3: Brennraum
- 4: Kolben
- 5: Kolbenmulde
- 6: Zylinderkopf
- 7: Direkteinblasventil
- 8: Erster Zuführkanal
- 9: Zündkerze
- 10: Zündspitze
- 11: Zweiter Zuführkanal
- 12: Mündung des zweiten Zuführkanals in Brennraum
- 13: Mündung des ersten Zuführkanals in zweiten Zuführkanal
- 14: Wasserstoff-Speichereinrichtung
- 15: Gaszulauf
- 16: Kolbenbewegungsrichtung
- 20: Motorsteuerungseinrichtung

## Patentansprüche

1. Fremdgezündete Brennkraftmaschine (1) mit innerer Gemischbildung zur Verbrennung eines Gemischs aus einem gasförmigen Kraftstoff und Luft unter Arbeitsleistung, umfassend
mindestens einen Zylinder (2), in dem ein Brennraum (3) zwischen einem längsbeweglich angeordneten Kolben (4) und einem Zylinderkopf (6) begrenzt ist, wobei jeder der mindestens einen Zylinder (2) umfasst:
ein im Zylinderkopf (6) angeordnetes Direkteinblasventil (7), das beabstandet zum Brennraum (3) in einem in den Brennraum (3) unmittelbar mündenden ersten Zuführkanal (8) angeordnet ist; und
eine im Zylinderkopf (6) angeordnete, eine Zündspitze (10) aufweisende Zündkerze (9), die in einem in den Brennraum mündenden zweiten Zuführkanal (11) angeordnet ist, wobei die Zündspitze (10) beabstandet zur Mündung (12) des zweiten Zuführkanals (11) in den Brennraum (3) angeordnet ist;
eine Motorsteuerungseinrichtung (20), die ausgebildet ist, eine Gaseinblasung des gasförmigen Kraftstoffes mittels des Direkteinblasventils (7) während eines Ansaugvorgangs durchzuführen und vor Beginn der Kompressionsphase zu beenden;
**dadurch gekennzeichnet, dass** der erste Zuführkanal (8) an einer anderen Stelle als der zweite Zuführkanal (11) in den Brennraum (3) mündet.

2. Fremdgezündete Brennkraftmaschine (1) nach Anspruch 1,
a) wobei der gasförmige Kraftstoff Wasserstoff ist; und/oder
b) wobei das Direkteinblasventil (7) mit einer Wasserstoff-Speichereinrichtung (14) in Fluidverbindung steht.

3. Fremdgezündete Brennkraftmaschine (1) nach einem der vorhergehenden Ansprüche, wobei der zweite Zuführkanal (11) in einem mittleren Bereich eines Brennraumdachs (17) in den Brennraum (3) mündet, vorzugsweise mittig am Brennraumdach (17) in den Brennraum (3) mündet.

4. Fremdgezündete Brennkraftmaschine (1) nach einem der vorhergehenden Ansprüche, wobei die Brennkraftmaschine keine Drosselklappe aufweist.

5. Fremdgezündete Brennkraftmaschine nach einem der vorhergehenden Ansprüche, umfassend eine Abgasrückführung nach dem Spenderzylinderprinzip, die ausgebildet ist, Abgas einer Teilmenge der Zylinder der Brennkraftmaschine auf eine Ansaugseite rückzuführen.

6. Fremdgezündete Brennkraftmaschine (1) nach einem der vorhergehenden Ansprüche, wobei der Kolben eine konkave Mulde (5) aufweist.

7. Fremdgezündete Brennkraftmaschine nach Anspruch 6, wobei in der konkaven Mulde eine konvexe Erhebung vorgesehen ist.

8. Kraftfahrzeug, vorzugsweise Nutzfahrzeug, wie beispielsweise ein Lastkraftwagen oder Omnibus, mit einer fremdgezündeten Brennkraftmaschine nach einem der vorhergehenden Ansprüche.

9. Verwendung einer fremdgezündeten Brennkraftmaschine (1) gemäß einem der Ansprüche 1 bis 7 als Generatorantriebsmotor zur Stromerzeugung oder für maritime Anwendungen.

10. Verwendung einer fremdgezündeten Brennkraftmaschine (1) gemäß einem der Ansprüche 1 bis 7, wobei der gasförmige Kraftstoff unter Druck direkt über den ersten Zuführkanal (8) in den Brennraum (3) eingeblasen wird.

## Claims

1. A spark-ignition internal combustion engine (1) with internal mixture formation for the combustion of a mixture of a gaseous fuel and air under working power, comprising:
at least one cylinder (2) in which a combustion chamber (3) is defined between a piston (4) arranged to move longitudinally and a cylinder head (6), each of the at least one cylinder (2) comprising:
a direct injection valve (7) arranged in the cylinder head (6), which is arranged at a distance from the combustion chamber (3) in a first supply passage (8) opening directly into the combustion chamber (3); and
an ignition plug (9) arranged in the cylinder head (6) and having an ignition tip (10), which is arranged in a second supply passage (11) opening into the combustion chamber, the ignition tip (10) being arranged at a distance from the opening (12) of the second supply passage (11) into the combustion chamber (3);
an engine control device (20) which is configured to perform a gas injection of the gaseous fuel by the direct injection valve (7) during an intake process and to terminate it before the start of the compression phase;
**characterised in that** the first supply passage (8) opens into the combustion chamber (3) at a different location than the second supply passage (11).

2. The spark-ignition internal combustion engine (1) according to claim 1,
a) wherein the gaseous fuel is hydrogen; and/or
b) wherein the direct injection valve (7) is in fluid communication with a hydrogen storage device (14).

3. The spark-ignition internal combustion engine (1) according to one of the preceding claims, wherein the second supply passage (11) opens into the combustion chamber (3) in a central region of a combustion chamber roof (17), preferably opens into the combustion chamber (3) in the centre of the combustion chamber roof (17).

4. The spark-ignition internal combustion engine (1) according to one of the preceding claims, wherein the internal combustion engine comprises no throttle valve.

5. The spark-ignition internal combustion engine (1) according to one of the preceding claims, comprising an exhaust gas recirculation according to the donor cylinder principle, which is configured to recirculate exhaust gas from a subset of the cylinders of the internal combustion engine to an intake side.

6. The spark-ignition internal combustion engine (1) according to one of the preceding claims, wherein the piston has a concave depression (5).

7. The spark-ignition internal combustion engine (1) according to claim 6, wherein a convex projection is provided within the concave depression.

8. A motor vehicle, preferably a commercial vehicle, such as a lorry or bus, with a spark-ignition internal combustion engine according to one of the preceding claims.

9. A use of a spark-ignition internal combustion engine (1) according to one of claims 1 to 7 as a generator drive engine for power generation or for maritime applications.

10. A use of a spark-ignition internal combustion engine (1) according to one of claims 1 to 7, wherein the gaseous fuel is injected under pressure directly into the combustion chamber (3) via the first supply passage (8).

## Revendications

1. Moteur à combustion interne à allumage commandé (1) avec formation de mélange interne pour la combustion d'un mélange d'un carburant gazeux et d'air en fonctionnement, ledit moteur comprenant
au moins un cylindre (2) dans lequel une chambre de combustion (3) est délimitée entre un piston (4) mobile longitudinalement et une culasse (6), chacun des au moins un cylindre (2) comprenant :
une soupape d'injection directe (7) qui est disposée dans la culasse (6) et qui est disposée à distance de la chambre de combustion (3) dans un premier conduit d'alimentation (8) qui débouche directement dans la chambre de combustion (3) ; et
une bougie d'allumage (9) qui est disposée dans la culasse (6), qui comporte une pointe d'allumage (10) et qui est disposée dans un deuxième conduit d'alimentation (11) qui débouche dans la chambre de combustion, la pointe d'allumage (10) étant disposée à distance de l'embouchure (12) du deuxième conduit d'alimentation (11) dans la chambre de combustion (3) ;
un dispositif de commande de moteur (20) qui est conçu pour effectuer une injection du carburant gazeux au moyen de la soupape d'injection directe (7) pendant un processus d'admission et pour y mettre fin avant le début de la phase de compression ;
**caractérisé en ce que** le premier conduit d'alimentation (8) débouche dans la chambre de combustion (3) en un point différent du deuxième conduit d'alimentation (11).

2. Moteur à combustion interne à allumage commandé (1) selon la revendication 1,
a) le carburant gazeux étant de l'hydrogène ; et/ou
b) la soupape d'injection directe (7) étant en communication fluidique avec un dispositif de stockage d'hydrogène (14).

3. Moteur à combustion interne à allumage commandé (1) selon l'une des revendications précédentes,
le deuxième conduit d'alimentation (11) débouchant dans la chambre de combustion (3) dans une zone médiane d'un toit de chambre de combustion (17), et débouchant de préférence dans la chambre de combustion (3) au milieu du toit de chambre de combustion (17).

4. Moteur à combustion interne à allumage commandé (1) selon l'une des revendications précédentes,
le moteur à combustion interne ne comportant pas de papillon de gaz.

5. Moteur à combustion interne à allumage commandé selon l'une des revendications précédentes,
ledit moteur comprenant une recirculation de gaz d'échappement selon le principe du cylindre donneur, laquelle est conçue pour renvoyer les gaz d'échappement d'un sous-ensemble de cylindres du moteur à combustion interne vers un côté admission.

6. Moteur à combustion interne à allumage commandé (1) selon l'une des revendications précédentes,
le piston comportant une cavité concave (5).

7. Moteur à combustion interne à allumage commandé selon la revendication 6,
une élévation convexe étant prévue dans la cavité concave.

8. Véhicule automobile, de préférence véhicule utilitaire, tel qu'un camion ou un bus, équipé d'un moteur à combustion interne à allumage commandé selon l'une des revendications précédentes.

9. Utilisation d'un moteur à combustion interne à allumage commandé (1) selon l'une des revendications 1 à 7 comme moteur d'entraînement de générateur dans la production de l'électricité ou dans des applications maritimes.

10. Utilisation d'un moteur à combustion interne à allumage commandé (1) selon l'une des revendications 1 à 7,
le carburant gazeux étant injecté sous pression directement dans la chambre de combustion (3) par le biais du premier conduit d'alimentation (8).
